# EUROPEAN PATENT APPLICATION

(11) **EP 2 857 978 A1**
(43) Date of publication of application: **08.04.2015**
(21) Application number: 13797953.0
(22) Date of filing: 13.03.2013
(51) Int. Cl.: G06F 13/00

(54) **INFORMATION PROCESSING DEVICE, INFORMATION PROCESSING METHOD AND RECORDING MEDIUM**

(30) Priority: 30.05.2012 JP 2012122884
(71) Applicant: Sony Corporation, Tokyo 108-0075 (JP)
(72) Inventor: MIYAKAWA, Eiji, Tokyo 108-0075 (JP)
(74) Representative: MFG Patentanwälte Meyer-Wildhagen Meggle-Freund Gerhard PartG mbB
(86) International application number: PCT/JP2013/056995
(87) International publication number: WO 2013/179724

(57) **Abstract**

Provided is an information processing apparatus including an information extracting unit configured to extract first information related to an account of a first user in a social network service (SNS) from among data acquired by a non-contact technique, a request generating unit configured to generate a command to request setting of a connection between the first user and a second user in the SNS by use of the first information, the second user using the information processing apparatus, and a request executing unit configured to transmit the command to an application programming interface (API) corresponding to the SNS.

## Description

### Technical Field

The present invention relates to an information processing apparatus, an information processing method, and a recording medium.

### Background Art

There are a large number of techniques to read out information by a non-contact technique, including near field communication (NFC) and two-dimensional code, for example. Such techniques do not need a physical connection between apparatuses and a user's complicated operation and allows a user to read out information by only putting apparatuses close to each other, for example, and thus are used in various scenes today.

For example, information exchanged by a non-contact technique is commonly used for marketing. As an example, Patent Literature 1 discloses a technique to realize incentive marketing using a non-contact IC card. In addition, there are a large number of examples such as distribution of coupons by use of information read out by a non-contact technique and addition of points of a loyalty program.

### Citation List

### Patent Literature

Patent Literature 1: JP 2011-210140A

### Summary of Invention

### Technical Problem

However, exchange of information by a non-contact technique is fundamentally a temporary action, and accordingly, it has been difficult to use such exchange for continuous promotion with respect to a user. If a store can read out a user's email address for example, promotion information can be distributed continuously; however, since it is not allowed to automatically transmit user's individual information, the user has to approve the transmission. This procedure diminishes easiness of an operation procedure, which is one of advantages of a non-contact technique.

Accordingly, the present disclosure proposes a novel and improved information processing apparatus, information processing method, and recording medium which enable continuous access to a user by use of information read out by a non-contact technique.

### Solution to Problem

According to the present disclosure, there is provided an information processing apparatus including an information extracting unit configured to extract first information related to an account of a first user in a social network service (SNS) from among data acquired by a non-contact technique, a request generating unit configured to generate a command to request setting of a connection between the first user and a second user in the SNS by use of the first information, the second user using the information processing apparatus, and a request executing unit configured to transmit the command to an application programming interface (API) corresponding to the SNS.

According to the present disclosure, there is provided an information processing method including extracting first information related to an account of a first user in a social network service (SNS) from among data acquired by a non-contact technique, generating a command to request setting of a connection between the first user and a second user in the SNS by use of the first information, the second user using the information processing apparatus, and transmitting the command to an application programming interface (API) corresponding to the SNS.

According to the present disclosure, there is provided a recording medium having a program recorded thereon, the program causing a computer to realize a function of extracting first information related to an account of a first user in a social network service (SNS) from among data acquired by a non-contact technique, a function of generating a command to request setting of a connection between the first user and a second user in the SNS by use of the first information, the second user using the information processing apparatus, and a function of transmitting the command to an application programming interface (API) corresponding to the SNS.

The first information related to the user account in the SNS is transmitted from the first user who desires to set a connection with the second user in the SNS. The second user sets the connection with the first user in the SNS by use of the first information. The connection in the SNS can be set without disclosing individual information such as an email address of the second user to the first user. Accordingly, it becomes possible for the second user to automatically execute the setting of the connection in the SNS without an approving procedure of the second user (the approving procedure may be performed though). When the connection in the SNS is set, the first user can continuously access the second user by posting information to be browsed by the second user, for example.

### Advantageous Effects of Invention

As described above, according to the present disclosure, it becomes possible to enable a continuous access to a user by use of information read out by a non-contact technique.

### Brief Description of Drawings

[FIG. 1] FIG. 1 shows a schematic configuration of a system according to a first embodiment of the present disclosure.
[FIG. 2] FIG. 2 is a block diagram showing a schematic functional configuration of a terminal apparatus according to the first embodiment of the present disclosure.
[FIG. 3] FIG. 3 is a flowchart showing an example of processing in a terminal apparatus according to the first embodiment of the present disclosure.
[FIG. 4] FIG. 4 shows a screen display example at a time of using an SNS in the first embodiment of the present disclosure.
[FIG. 5] FIG. 5 shows a schematic configuration of a system according to a second embodiment of the present disclosure.
[FIG. 6] FIG. 6 is a block diagram showing a schematic functional configuration of a terminal apparatus according to the second embodiment of the present disclosure.
[FIG. 7] FIG. 7 is a flowchart showing an example of processing in a terminal apparatus according to the second embodiment of the present disclosure.
[FIG. 8] FIG. 8 is a block diagram showing a hardware configuration of an information processing apparatus.

### Description of Embodiments

Hereinafter, preferred embodiments of the present disclosure will be described in detail with reference to the appended drawings. Note that, in this specification and the drawings, elements that have substantially the same function and structure are denoted with the same reference signs, and repeated explanation is omitted.

Note that the description will be made in the following order.
1. First Embodiment
2. Second Embodiment
3. Hardware Configuration
4. Supplementary Explanation

### (1. First Embodiment)

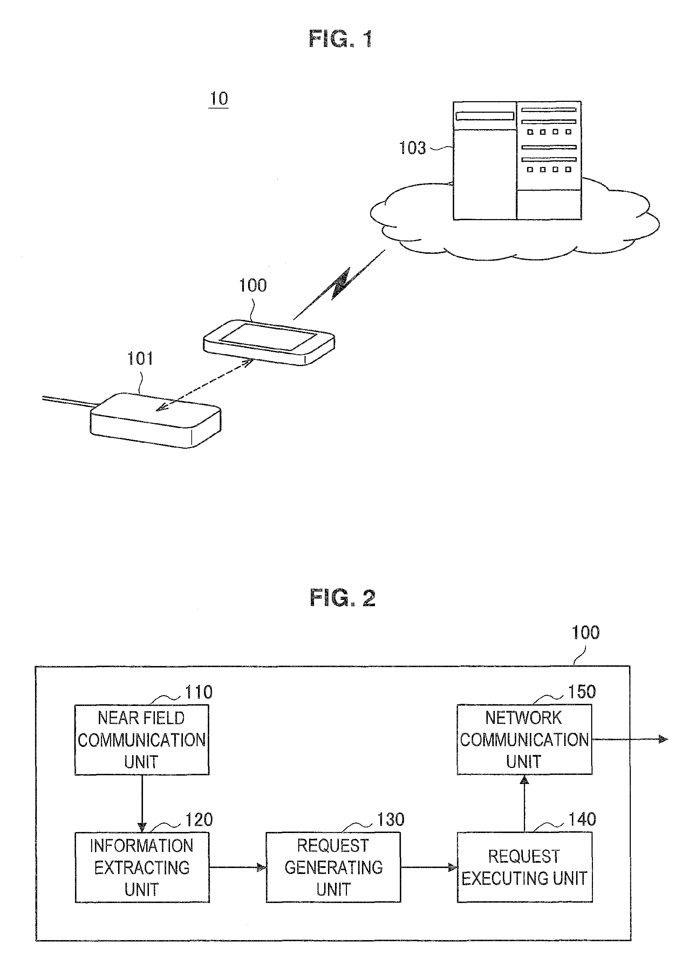

First, a first embodiment of the present disclosure will be described with reference to FIG. 1 to FIG. 4. In this embodiment, data are acquired through near field communication.

### (System Configuration)

FIG. 1 shows a schematic configuration of a system according to the first embodiment of the present disclosure. Referring to FIG. 1, a system 10 includes a terminal apparatus 100, a reader/writer 101, and a server 103.

The reader/writer 101 is an apparatus installed by a first user (e.g., a store) and transmits a modulation signal to the terminal apparatus 100. The modulation signal includes social network service (SNS) connection information. The SNS connection information is information used for setting of a connection in an SNS in processing of the terminal apparatus 100, which will be described later. Examples of the SNS connection information include information used for identifying the SNS, information used for identifying an account of the first user in the SNS, and information of a certain tag that is set in the SNS. The modulation signal may include information other than the SNS connection information, such as an address of a Web site of the store or information used as a coupon. Note that the modulation signal transmitted by the reader/writer 101 may be set by a terminal apparatus (not shown) used by the first user, the terminal apparatus being connected to the reader/writer 101, for example.

The terminal apparatus 100 is an apparatus that is carried by a second user (e.g., a customer) and has a function of near field communication (NFC). When the customer carrying the terminal apparatus 100 visits the store and puts the terminal apparatus 100 close to the reader/writer 101, near field communication is performed and the terminal apparatus 100 receives the modulation signal transmitted from the reader/writer 101. The terminal apparatus 100 demodulates the modulation signal and acquires information included therein. For example, the terminal apparatus 100 acquires SNS connection information included in the modulation signal. As described above, the SNS connection information is information used for setting of connection in the SNS. Accordingly, the terminal apparatus 100 generates a command to request connection setting in the SNS on the basis of the SNS connection information and transmits this command to an application program interface (API) of the SNS. In this embodiment, the API of the SNS is prepared in the server 103, and the terminal apparatus 100 transmits the command to the server 103 through network communication. The network communication may employ any scheme with or without wires. The terminal apparatus 100 may be any of a variety of apparatuses having both functions of near field communication and network communication, such as a cell phone (including a smartphone) or a tablet personal computer (PC).

The server 103 is a server that provides the SNS on the network. The first user (the store) who installs the reader/writer 101 and the second user (the customer) who carries the terminal apparatus 100 both use this SNS. The SNS provides a function of setting a connection between the users. A user can set the connection with another user so as to be able to subscribe to a profile or post of the other user or to receive a notification when a new post is made, for example. Note that the setting of the connection is called "follow", for example, depending on the kind of the SNS. The server 103 processes the command transmitted from the terminal apparatus 100 in accordance with the API and sets the connection between the first user (the store) and the second user (the customer) in the SNS.

### (Functional Configuration of Terminal Apparatus)

FIG. 2 is a block diagram showing a schematic functional configuration of the terminal apparatus according to the first embodiment of the present disclosure. Referring to FIG. 2, the terminal apparatus 100 includes a near field communication unit 110, an information extracting unit 120, a request generating unit 130, a request executing unit 140, and a network communication unit 150. The terminal apparatus 100 may be achieved by a hardware configuration of an information processing apparatus, which will be described later. For example, the information extracting unit 120, the request generating unit 130, and the request executing unit 140 may be achieved as software by use of a central processing unit (CPU).

The near field communication unit 110 receives the modulation signal transmitted from the reader/writer 101 and demodulates the modulation signal so as to acquire data. The near field communication unit outputs the acquired data to the information extracting unit 120. The near field communication unit 110 may be achieved by an antenna or a communication circuit for near field communication (NFC), for example.

The information extracting unit 120 extracts information including the above SNS connection information from among the data acquired by the near field communication unit 110 and provides the information to the request generating unit 130. The SNS connection information may include, for example, information used for identifying the SNS, information used for identifying an account of the first user in the SNS, and information of a certain tag that is set in the SNS. Further, the information extracting unit 120 may extract information other than the SNS connection information from among the data and may provide the information to another functional configuration (not shown) of the terminal apparatus 100.

On the basis of the SNS connection information extracted by the information extracting unit 120, the request generating unit 130 generates a command to request setting of the connection between the first user and the second user in the SNS. The generated command is processed in the server 103 in accordance with the API of the SNS, so that the request generating unit 130 generates a command in accordance with information of the API provided in advance.

As described above, the SNS connection information may include, for example, information used for identifying the SNS, information used for identifying an account of the first user in the SNS, and information of a certain tag that is set in the SNS. For example, the request generating unit 130 specifies one or more target SNSs from among a plurality of available SNSs by use of information used for identifying the SNS. Accordingly, in a case in which the target SNS is limited to one SNS, for example, the SNS connection information does not have to include information used for identifying the SNS. Alternatively, the SNS connection information may include information used for identifying the SNS regardless of whether the target SNS has to be specified or not and may be used for determining whether the request generating unit 130 generates a command or not.

Further, for example, the request generating unit 130 specifies a target user to whom the connection is set by use of information used for identifying an account of the first user in the SNS. Information of the target user may be set as parameters of the command to be transmitted, for example. Information of a certain tag is used in a case in which a post of the first user is distinguished from a post of another user in display of the SNS, for example, as will be described later. Accordingly, in a case in which such a display is not performed, for example, the SNS connection information does not have to include information of a certain tag.

As described above, in a case in which only information serving as parameters of a command is transmitted from the reader/writer 101 through near field communication and, in the terminal apparatus 100 which receives the information, the request generating unit 130 generates the command, information transmitted through near field communication can be minimum. In another embodiment, the command itself may be set as the SNS connection information. In this case, the request generating unit 130 may only transfer the SNS connection information from the information extracting unit 120 to the request executing unit 140. Note that, also in this case, since this command includes at least information used for identifying an account of the first user, the SNS connection information can also be said to include "information related to an account of the first user".

The request executing unit 140 transmits the command generated by the request generating unit 130 to the server 103 via the network communication unit 150. As described above, the API of the SNS is prepared in the server 103, and the transmitted command may invoke a certain function (a function that sets the connection between users) of the API. Note that the request executing unit 140 does not necessarily transmit the command immediately after the request generating unit 130 generates the command. For example, in a case in which communication by the network communication unit 150 is not available, the request executing unit 140 may hold the transmission of the command, and when the communication becomes available, the request executing unit 140 may transmit the command. Further, request executing unit 140 may transmit the command when an application for using the SNS is started in the terminal apparatus 100.

The network communication unit 150 communicates with the server 103 through a network such as the Internet. The network communication unit 150 transmits the request command outputted from the request executing unit 140 to the server 103. The network communication unit 150 may be achieved by any of a variety of communication apparatuses.

### (Processing Flow)

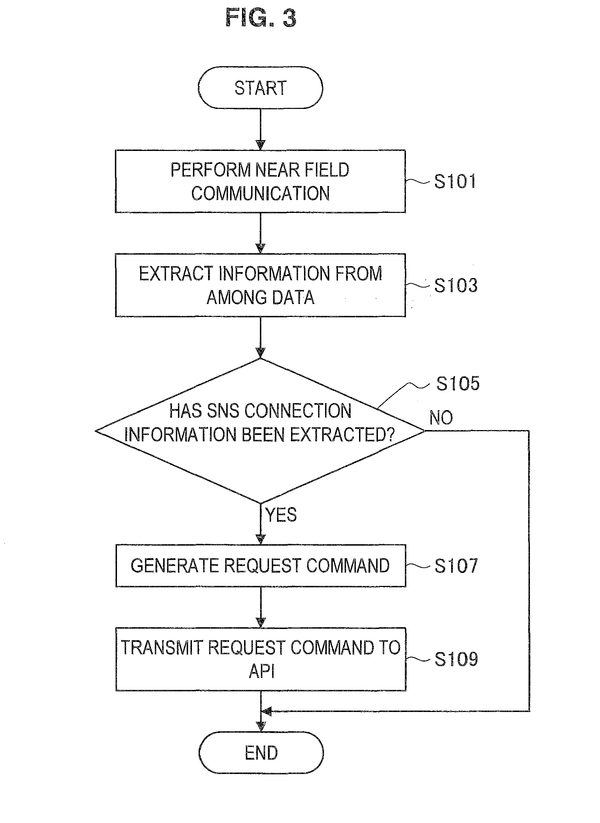

FIG. 3 is a flowchart showing an example of processing in the terminal apparatus according to the first embodiment of the present disclosure.

First, the near field communication unit 110 performs near field communication with the reader/writer 101 (step S101). As described above, near field communication is performed by approach of the terminal apparatus 100 to the reader/writer 101 and reception of the modulation signal by the near field communication unit 110, the modulation signal being transmitted from the reader/writer 101. The near field communication unit 110 demodulates the modulation signal and acquires data.

Next, the information extracting unit 120 extracts information from among the data acquired by near field communication in the step S101 (step S103). Information that can be extracted includes the SNS connection information and other information.

Here, the information extracting unit 120 determines whether the SNS connection information has been extracted from among the data or not (step S105). This may be determination of whether information used for identifying the SNS (such as a character string indicating the name of the SNS) included in the SNS connection information has been extracted from among the data or not, for example. Further, regardless of the name of the SNS, a flag indicating that the SNS connection information is included may be decided in advance.

In a case in which it is determined that the SNS connection information has been extracted in the step S105, the information extracting unit 120 provides the SNS connection information to the request generating unit 130 and generates the command to request setting of the connection (step S107). The generated command may include information used for identifying a target of connection setting and information of a certain tag as parameters.

Next, the request executing unit 140 transmits the request command generated in the step S107 to the API of the SNS in the server 103 (step S109). In the server 103, the request command is processed in accordance with the API, and the connection is set between the first user (the store) and the second user (the customer) in the SNS. Note that, as described above, the request command is not necessarily transmitted to the server 103 immediately after the step S107, and may be transmitted when, for example, network communication becomes available or when the application related to the SNS is started.

On the other hand, in a case in which it is determined that the SNS connection information has not been extracted in the step S105, the processes in the steps S107 and S109 are not performed. In this case, since the data include certain information other than the SNS connection information (e.g., coupon information or point information), the information is processed by another part of the terminal apparatus 100. Note that the data may include other information in addition to the SNS connection information. In this case, in addition to the processes in the steps S107 and S109, a process may also be performed on the other information.

### (Display Example in SNS)

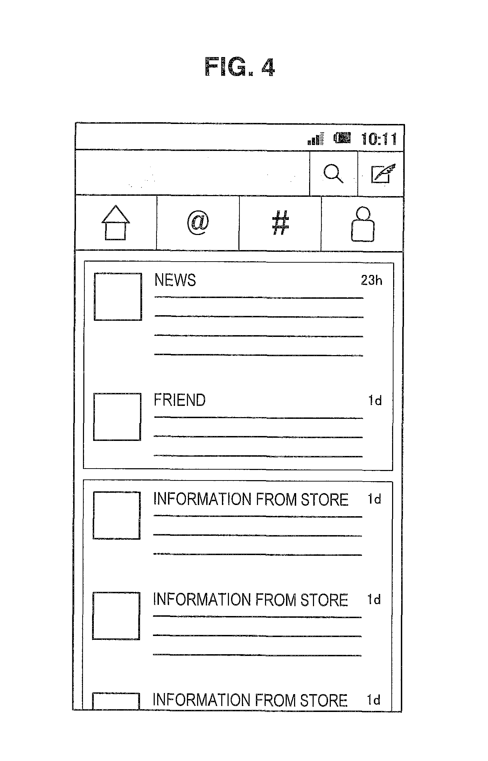

FIG. 4 shows a screen display example at a time of using the SNS in the first embodiment of the present disclosure. Referring to FIG. 4, in a screen used when the second user (the customer) uses the SNS, a post of the first user (the store), to whom the connection is set by the above described near field communication, is displayed as "information from store" in a window different from a normal window showing posts of other users.

Such a display is achieved by setting a certain tag as parameters of the request command generated by the request generating unit 130 in the terminal apparatus 100, for example. This tag may indicate that the setting of the connection has been made on the basis of the SNS link information received through near field communication. A program of the server 103 providing the SNS or a program of the terminal apparatus 100 displaying a list of posts in accordance with information provided from the server 103 sorts and displays posts in accordance with the tag.

That is, in this case, the tag can be regarded as being information indicating an attribute of the connection between the first user and the second user. Such information may be transmitted from the reader/writer 101 to the terminal apparatus 100 through near field communication, as described above. Alternatively, the information of the tag may not be included in information transmitted from the reader/writer 101 but may be added by the request generating unit 130 of the terminal apparatus 100. Accordingly, it becomes possible to further reduce the amount of information that is required to be transmitted through non-contact wireless communication.

Further, as in the shown example, the connection set between the first user and the second user in the SNS may be the second user's subscription to posts of the first user. In a case in which the connection is one-way provision of information from the first user to the second user in this manner, the first user is unable to know individual information (including information that is only public to friends in the SNS) of the second user. Accordingly, such a connection is not troublesome even when an automatic setting is made without requiring the second user's approval.

### (2. Second Embodiment)

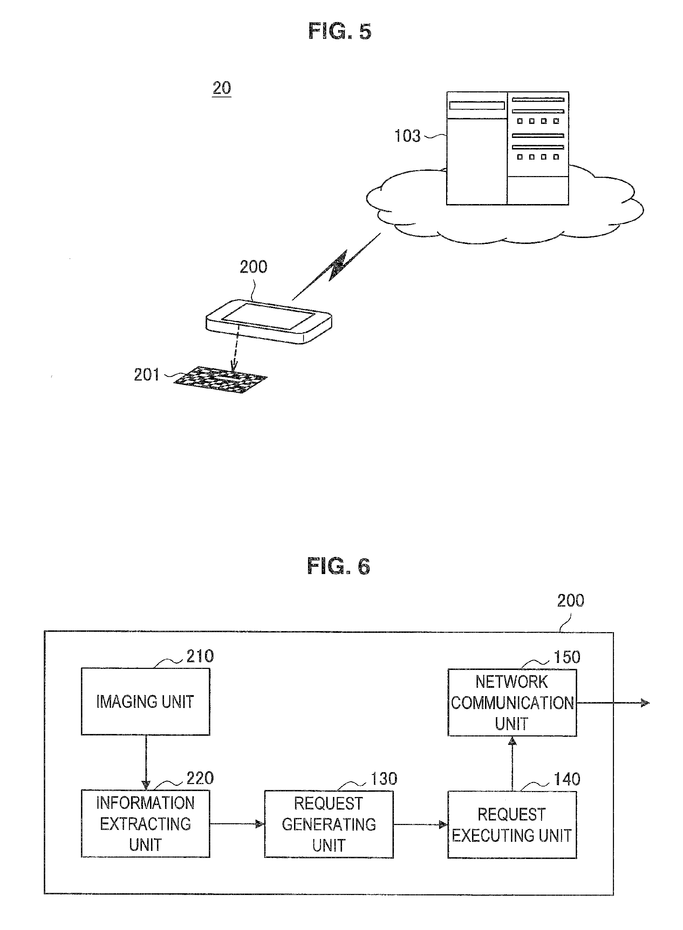

Next, a second embodiment of the present disclosure will be described with reference to FIG. 5 to FIG. 7. In this embodiment, data are read out from a two-dimensional code.

### (System Configuration)

FIG. 5 shows a schematic configuration of a system according to the second embodiment of the present disclosure. Referring to FIG. 5, a system 20 includes a terminal apparatus 200, a two-dimensional code 201, and the server 103. Note that the server 103 has the same configuration as that in the above described first embodiment, and therefore, a detailed description thereof is omitted.

The two-dimensional code 201 may be printed on a signboard or a poster in the store or displayed on a display apparatus, for example, by the first user (the store). In the two-dimensional code 201, data which are encoded in accordance with a certain protocol are displayed. The data include the SNS connection information. The SNS connection information is information used for setting of the connection in the SNS in processing of the terminal apparatus 200, which will be described later. Specific examples of the content of the SNS connection information may be the same as those in the first embodiment. Note that the data displayed in the two-dimensional code 201 may include information other than the SNS connection information, such as an address of a Web site of the store and information used as a coupon.

The terminal apparatus 200 is an apparatus that is carried by the second user (customer) and has an imaging function. When the customer carrying the terminal apparatus 200 visits the store and images the two-dimensional code 201 by use of an imaging unit of the terminal apparatus 200, image data of the two-dimensional code 201 are acquired. The terminal apparatus 200 decodes the two-dimensional code 201 on the basis of the image data and acquires information included therein. For example, the terminal apparatus 200 acquires the SNS connection information included in the two-dimensional code 201. The terminal apparatus 200 generates a command to request connection setting in the SNS on the basis of the SNS connection information and transmits this command to the API of the SNS. Also in this embodiment, the API of the SNS is prepared in the server 103, and the terminal apparatus 200 transmits the command to the server 103 through network communication. The network communication may employ any scheme with or without wires. The terminal apparatus 200 may be any of a variety of apparatuses having both the imaging function and a function of near field communication, such as a cell phone (including a smartphone), a tablet PC, and a digital camera.

### (Functional Configuration of Terminal Apparatus)

FIG. 6 is a block diagram showing a schematic functional configuration of the terminal apparatus according to the second embodiment of the present disclosure. Referring to FIG. 6, the terminal apparatus 200 includes an imaging unit 210, an information extracting unit 220, the request generating unit 130, the request executing unit 140, and the network communication unit 150. The terminal apparatus 200 may be achieved by a hardware configuration of an information processing apparatus, which will be described later. For example, the information extracting unit 220, the request generating unit 130, and the request executing unit 140 may be achieved as software by use of a CPU. Note that the request generating unit 130, the request executing unit 140, and the network communication unit 150 are the same structural elements as those described in the above first embodiment, and therefore, a detailed description thereof is omitted.

The imaging unit 210 performs photoelectric conversion of light from a subject by use of image sensors and generates image data. The imaging unit 210 may include optical elements such as a lens that guides the light to the image sensors and driving devices for driving these elements. The imaging unit 210 outputs the image data generated by imaging the two-dimensional code 201 to the information extracting unit 220.

The information extracting unit 220 acquires data by decoding the two-dimensional code 201 on the basis of the image data generated by the imaging unit 210. Further, the information extracting unit 220 extracts information including the SNS connection information from among the acquired data and provides the information to the request generating unit 130. Specific examples of the content of the SNS connection information may be the same as those in the first embodiment. Alternatively, the information extracting unit 220 may extract information other than the SNS connection information from among the data and may provide the information to a functional configuration (not shown) other than the terminal apparatus 200.

### (Processing Flow)

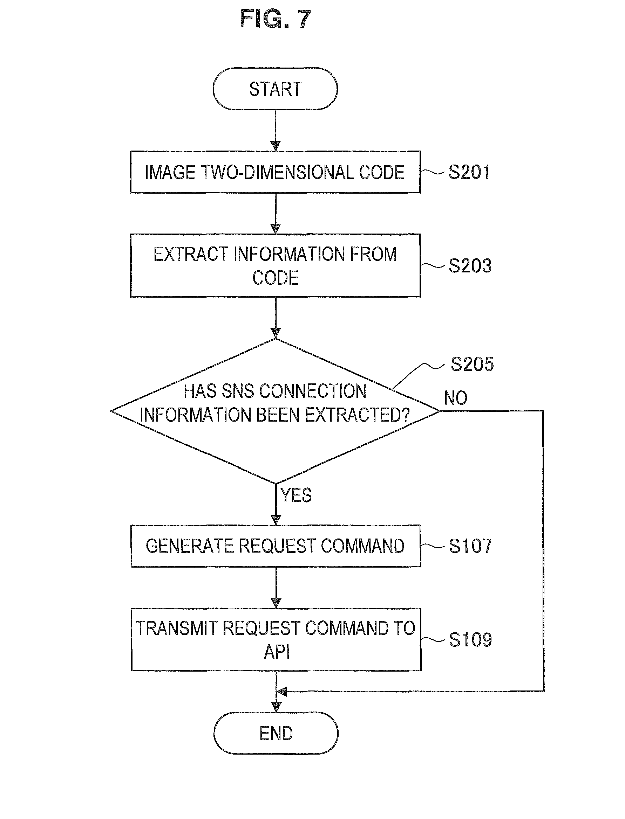

FIG. 7 is a flowchart showing an example of processing in the terminal apparatus according to the second embodiment of the present disclosure. Note that among the shown steps, the steps S107 and S109 are the same as those in the above first embodiment, and therefore, a detailed description thereof is omitted.

First, the imaging unit 210 images the two-dimensional code 201 (step S201). Thus, image data including the two-dimensional code 201 are generated. The image data are outputted to the information extracting unit 220. The information extracting unit 220 decodes the two-dimensional code 201 on the basis of the image data to acquire data. Further, the information extracting unit 220 extracts information from among the acquired data (step S203). The information that can be extracted includes the SNS connection information and other information.

Here, the information extracting unit 220 determines whether the SNS connection information has been extracted from among the data or not (step S205). This may be determination of whether information used for identifying the SNS (such as a character string indicating the name of the SNS) included in the SNS connection information has been extracted from among the data or not, for example. Further, regardless of the name of the SNS, a flag indicating that the SNS connection information is included may be decided in advance.

In a case in which it is determined that the SNS connection information has been extracted in the step S205, the information extracting unit 220 provides the SNS connection information to the request generating unit 130, generates the request command in the steps S107 and S109, and performs a transmission process. On the other hand, in a case in which it is determined that the SNS connection information has not been extracted in the step S205, other extracted information is processed by another part of the terminal apparatus 200. Note that the data may include other information in addition to the SNS connection information. In this case, in addition to the processes in the steps S107 and S109, a process may also be performed on the other information.

### (3. Hardware Configuration)

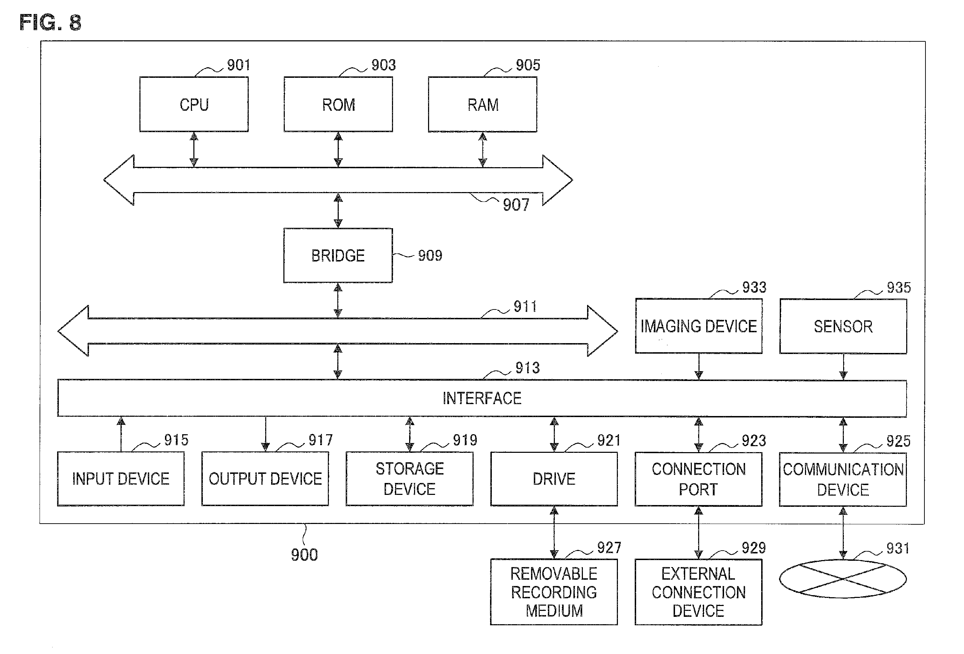

Next, with reference to FIG. 8, a hardware configuration of an information processing apparatus according to an embodiment of the present disclosure will be described. FIG. 8 is a block diagram showing a hardware configuration of an information processing apparatus. An information processing apparatus 900 which is shown may achieve the terminal apparatus 100, the terminal apparatus 200, and the server 300 in the above described embodiments, for example.

The information processing apparatus 900 includes a central processing unit (CPU) 901, read only memory (ROM) 903, and random access memory (RAM) 905. Further, the information processing apparatus 900 may also include a host bus 907, a bridge 909, an external bus 911, an interface 913, an input device 915, an output device 917, a storage device 919, a drive 921, a connection port 923, and a communication device 925. Furthermore, the information processing apparatus 900 may include an imaging device 933 and a sensor 935 as necessary. The information processing apparatus 900 may also include, instead of or along with the CPU 901, a processing circuit such as a digital signal processor (DSP).

The CPU 901 functions as an arithmetic processing unit and a control unit and controls an entire operation or a part of the operation of the information processing apparatus 900 according to various programs recorded in the ROM 903, the RAM 905, the storage device 919, or a removable recording medium 927. The ROM 903 stores programs and arithmetic parameters used by the CPU 901. The RAM 905 primarily stores programs used in execution of the CPU 901 and parameters and the like varying as appropriate during the execution. The CPU 901, the ROM 903, and the RAM 905 are connected to each other via the host bus 907 configured from an internal bus such as a CPU bus or the like. In addition, the host bus 907 is connected to the external bus 911 such as a peripheral component interconnect/interface (PCI) bus via the bridge 909.

The input device 915 is a device operated by a user, such as a mouse, a keyboard, a touch panel, buttons, a switch, and a lever. Also, the input device 915 may be a remote control device using, for example, infrared light or other radio waves, or may be an external connection device 929 such as a cell phone compatible with the operation of the information processing apparatus 900. The input device 915 includes an input control circuit that generates an input signal on the basis of information input by the user and outputs the input signal to the CPU 901. The user inputs various kinds of data to the information processing apparatus 900 and instructs the information processing apparatus 900 to perform a processing operation by operating the input device 915.

The output device 917 is configured from a device capable of visually or aurally notifying the user of acquired information. For example, the output device 917 may be: a display device such as a liquid crystal display (LCD), a plasma display panel (PDP), or an organic electro-luminescence (EL) display; an audio output device such as a speaker or headphones; or a printer. The output device 917 outputs results obtained by the processing performed by the information processing apparatus 900 as video in the form of text or an image or as audio in the form of audio or sound.

The storage device 919 is a device for storing data configured as an example of a storage unit of the information processing apparatus 900. The storage device 919 is configured from, for example, a magnetic storage device such as a hard disk drive (HDD), a semiconductor storage device, an optical storage device, or a magneto-optical storage device. This storage device 919 stores programs to be executed by the CPU 901, various data, and various data obtained from the outside.

The drive 921 is a reader/writer for the removable recording medium 927 such as a magnetic disk, an optical disc, a magneto-optical disk, or a semiconductor memory, and is built in or externally attached to the information processing apparatus 900. The drive 921 reads out information recorded on the attached removable recording medium 927, and outputs the information to the RAM 905. Further, the drive 921 writes the record on the attached removable recording medium 927.

The connection port 923 is a port for allowing devices to directly connect to the information processing apparatus 900. Examples of the connection port 923 include a universal serial bus (USB) port, an IEEE1394 port, and a small computer system interface (SCSI) port. Other examples of the connection port 923 may include an RS-232C port, an optical audio terminal, and a high-definition multimedia interface (HDMI) port. The connection of the external connection device 929 to the connection port 923 may enable the various data exchange between the information processing apparatus 900 and the external connection device 929.

The communication device 925 is a communication interface configured from, for example, a communication device for establishing a connection to a communication network 931. The communication device 925 is, for example, a wired or wireless local area network (LAN), Bluetooth (registered trademark), a communication card for wireless USB (WUSB), or the like. Alternatively, the communication device 925 may be a router for optical communication, a router for asymmetric digital subscriber line (ADSL), a modem for various communications, or the like. The communication device 925 can transmit and receive signals and the like using a certain protocol such as TCP/IP on the Internet and with other communication devices, for example. The communication network 931 connected to the communication device 925 is configured from a network which is connected via wire or wirelessly and is, for example, the Internet, a home-use LAN, infrared communication, radio wave communication, and satellite communication.

The imaging device 933 is a device which images a real space by use of various members including an image sensor such as a charge coupled device (CCD) or a complementary metal oxide semiconductor (CMOS) and a lens for controlling image formation of a subject on the image sensor, and generates a pickup image. The imaging device 933 may image a still image or a moving image.

The sensor 935 is any of various sensors such as an acceleration sensor, a gyro sensor, a magnetic field sensor, an optical sensor, and a sound sensor. For example, the sensor 935 acquires information related to the state of the information processing apparatus 900 itself, such as the posture of the housing of the information processing apparatus 900, or information related to the peripheral environment of the information processing apparatus 900, such as the brightness or noise around the information processing apparatus 900. Further, the sensor 935 may include a global positioning system (GPS) sensor which measures the latitude, the longitude, and the altitude of the apparatus by receiving a GPS signal.

Heretofore, an example of the hardware configuration of the information processing apparatus 900 has been shown. Each of the structural elements described above may be configured using a general-purpose material, or may be configured from hardware dedicated to the function of each structural element. The configuration may be changed as appropriate according to the technical level at the time of carrying out embodiments.

### (4. Supplementary Explanation)

The above embodiments have shown the example in which an information providing means such as a reader/writer or a two-dimensional code is installed in a store and a connection in an SNS is used for promotion of the store; however, embodiments of the present disclosure are not limited to this example. For example, the connection in the SNS may be used for interaction between users. In this case, the reader/writer or the two-dimensional code may be achieved by a terminal apparatus such as a cell phone (including a smartphone) used by another user.

For example, in a case in which a terminal apparatus of a user A is made to function as a reader/writer and a terminal apparatus of a user B is made to read out information including the SNS connection information through near field communication from the terminal apparatus of the user A, it becomes easier to set the connection between the user A and the user B in the SNS. In a similar manner, the terminal apparatus of the user A may display a two-dimensional code and the terminal apparatus of the user B may image the two-dimensional code to read out information including the SNS connection information.

Further, although the above embodiments have shown the example in which the API of the SNS is prepared in the server, embodiments of the present disclosure are not limited to this example. For example, the API of the SNS may be prepared in a terminal apparatus used by a user, and a request command may be transmitted to this local API. In this case, the API may access the server to set the connection in the SNS.

Embodiments of the present disclosure may include, for example, the above described information processing apparatus (terminal apparatus or server), a system, an information processing method used for an information processing apparatus or a system, a program for causing an information processing apparatus to function, and a recording medium on which a program is recorded.

The preferred embodiments of the present invention have been described above with reference to the accompanying drawings, whilst the present invention is not limited to the above examples, of course. A person skilled in the art may find various alterations and modifications within the scope of the appended claims, and it should be understood that they will naturally come under the technical scope of the present invention.

Additionally, the present technology may also be configured as below.
(1) An information processing apparatus including:
   an information extracting unit configured to extract first information related to an account of a first user in a social network service (SNS) from among data acquired by a non-contact technique;
   a request generating unit configured to generate a command to request setting of a connection between the first user and a second user in the SNS by use of the first information, the second user using the information processing apparatus; and
   a request executing unit configured to transmit the command to an application programming interface (API) corresponding to the SNS.
(2) The information processing apparatus according to (1), wherein the request generating unit generates the command including second information indicating an attribute of the connection.
(3) The information processing apparatus according to (2),
   wherein the second user subscribes to a post of the first user in the SNS by the setting of the connection, and
   wherein the second information is used for distinguishing the post of the first user from a post of another user in a display when the second user browses the post of the first user.
(4) The information processing apparatus according to (2) or (3),
   wherein the second information is added by the request generating unit.
(5) The information processing apparatus according to any one of (1) to (4),
   wherein the information extracting unit extracts third information used for identifying the SNS from among the data, and
   wherein the request generating unit generates the command in a case in which the third information is extracted.
(6) The information processing apparatus according to any one of (1) to (5),
   wherein the second user subscribes to a post of the first user in the SNS by the setting of the connection.
(7) The information processing apparatus according to any one of (1) to (6),
   wherein the request executing unit transmits the command to the API when an application related to the SNS is started.
(8) The information processing apparatus according to any one of (1) to (7),
   wherein the request executing unit transmits the command to the API in a server on a network.
(9) The information processing apparatus according to (8),
   wherein the request executing unit transmits the command to the API when communication with the network is available.
(10) The information processing apparatus according to any one of (1) to (9),
   wherein the data are acquired through near field communication.
(11) The information processing apparatus according to any one of (1) to (9),
   wherein the data are acquired by decoding a pickup image of a two-dimensional code.
(12) An information processing method including:
   extracting first information related to an account of a first user in a social network service (SNS) from among data acquired by a non-contact technique;
   generating a command to request setting of a connection between the first user and a second user in the SNS by use of the first information, the second user using the information processing apparatus; and
   transmitting the command to an application programming interface (API) corresponding to the SNS.
(13) A recording medium having a program recorded thereon, the program causing a computer to realize:
   a function of extracting first information related to an account of a first user in a social network service (SNS) from among data acquired by a non-contact technique;
   a function of generating a command to request setting of a connection between the first user and a second user in the SNS by use of the first information, the second user using the information processing apparatus; and
   a function of transmitting the command to an application programming interface (API) corresponding to the SNS.

### Reference Signs List

- 100, 200: terminal apparatus
- 101: reader/writer
- 201: two-dimensional code
- 103: server
- 110: near field communication unit
- 210: imaging unit
- 120, 220: information extracting unit
- 130: request generating unit
- 140: request executing unit
- 150: network communication unit

## Claims

1. An information processing apparatus comprising:
an information extracting unit configured to extract first information related to an account of a first user in a social network service (SNS) from among data acquired by a non-contact technique;
a request generating unit configured to generate a command to request setting of a connection between the first user and a second user in the SNS by use of the first information, the second user using the information processing apparatus; and
a request executing unit configured to transmit the command to an application programming interface (API) corresponding to the SNS.

2. The information processing apparatus according to claim 1,
wherein the request generating unit generates the command including second information indicating an attribute of the connection.

3. The information processing apparatus according to claim 2,
wherein the second user subscribes to a post of the first user in the SNS by the setting of the connection, and
wherein the second information is used for distinguishing the post of the first user from a post of another user in a display when the second user browses the post of the first user.

4. The information processing apparatus according to claim 2,
wherein the second information is added by the request generating unit.

5. The information processing apparatus according to claim 1,
wherein the information extracting unit extracts third information used for identifying the SNS from among the data, and
wherein the request generating unit generates the command in a case in which the third information is extracted.

6. The information processing apparatus according to claim 1,
wherein the second user subscribes to a post of the first user in the SNS by the setting of the connection.

7. The information processing apparatus according to claim 1,
wherein the request executing unit transmits the command to the API when an application related to the SNS is started.

8. The information processing apparatus according to claim 1,
wherein the request executing unit transmits the command to the API in a server on a network.

9. The information processing apparatus according to claim 8,
wherein the request executing unit transmits the command to the API when communication with the network is available.

10. The information processing apparatus according to claim 1,
wherein the data are acquired through near field communication.

11. The information processing apparatus according to claim 1,
wherein the data are acquired by decoding a pickup image of a two-dimensional code.

12. An information processing method comprising:
extracting first information related to an account of a first user in a social network service (SNS) from among data acquired by a non-contact technique;
generating a command to request setting of a connection between the first user and a second user in the SNS by use of the first information, the second user using the information processing apparatus; and
transmitting the command to an application programming interface (API) corresponding to the SNS.

13. A recording medium having a program recorded thereon, the program causing a computer to realize:
a function of extracting first information related to an account of a first user in a social network service (SNS) from among data acquired by a non-contact technique;
a function of generating a command to request setting of a connection between the first user and a second user in the SNS by use of the first information, the second user using the information processing apparatus; and
a function of transmitting the command to an application programming interface (API) corresponding to the SNS.
